# EUROPÄISCHE PATENTSCHRIFT

(11) **EP 2 786 049 B1**
(45) Veröffentlichungstag und Bekanntmachung des Hinweises auf die Patenterteilung: **03.02.2016**
(21) Anmeldenummer: 12794873.5
(22) Anmeldetag: 24.11.2012
(51) Int. Cl.: F16H 63/34

(54) **GETRIEBENOTENTRIEGELUNG**
TRANSMISSION EMERGENCY UNLOCKING MEANS
DÉVERROUILLAGE D'URGENCE D'UNE BOÎTE DE VITESSES

(30) Priorität: 30.11.2011 DE 102011119747
(43) Veröffentlichungstag der Anmeldung: 08.10.2014
(73) Patentinhaber: Audi AG, 85045 Ingolstadt (DE)
(72) Erfinder: SCHEIBLECKER, Georg, 85110 Kipfenberg-Böhming (DE); WILKE, Bodo, 85122 Hitzhofen (DE); BHATTACHARYA, Arya, 74235 Erlenbach (DE)
(74) Vertreter: Wohnert, Dietmar
(86) Internationale Anmeldenummer: PCT/EP2012/004870
(87) Internationale Veröffentlichungsnummer: WO 2013/079182

(56) Entgegenhaltungen:
- US-A1- 2011 030 494

## Beschreibung

Die Erfindung betrifft eine Getriebenotentriegelung für ein bei eingelegter Parkstufe mechanisch blockiertes automatisches Getriebe, mit einem manuell betätigbaren Betätigungselement zum mechanischen Deaktivieren der Parkstufe.

Automatische Getriebe für Kraftfahrzeuge besitzen einen Betriebsbereich, der in verschiedene manuell vorwählbare Betriebsstufen unterteilt ist, die als Fahrstufen bezeichnet werden. Zu den Fahrstufen zählt auch die Parkstufe (Parkposition) und die Neutralposition. Fahrstufen eines automatischen Getriebes werden vom Fahrer an einer Steuereinheit ausgewählt, wodurch elektrohydraulische Stellglieder im automatischen Getriebe eingelegt werden. Bei eingelegter Parkstufe ist das automatische Getriebe mechanisch blockiert, so dass das Fahrzeug im Falle eines Stromausfalls oder bei einer Störung der zugehörigen elektronischen Steuerung nicht abgeschleppt werden kann. Um diese Sperre zu lösen, muss eine mechanische Notentriegelung betätigt werden. Dieselbe Problematik existiert auch bei neueren automatischen Getrieben, bei denen Bedieneingaben des Fahrers über ein Shift-by-Wire-Bedienelement elektronisch an das automatische Getriebe weitergegeben werden.

In der DE 10 2007 011 614 A1 wird eine Getriebenotentriegelung beschrieben, die mit dem Getriebewählschalter gekoppelt ist. Diese Vorrichtung ist auch für Shift-by-Wire-Schaltungen geeignet. Über ein Kopplungsglied, das beispielsweise als Hebel ausgebildet sein kann, kann die Notbetätigungsvorrichtung aktiviert werden. Die US 2011/0030494 A1 wird als der nächste Stand der Technik angesehen und offenbart die Präambel von Anspruch 1.

Aus der DE 199 40 029 A1 ist eine Fahrstufenwähleinrichtung mit einer Notbetätigung für eine Parksperre bekannt, die einen Bowdenzug aufweist, der mit einem Hebel verbunden ist. Zum Auslösen der Notbetätigung wird eine Zugkraft auf den Bowdenzug ausgeübt, so dass der Hebel verschwenkt wird und das automatische Getriebe freigibt.

Bei der aus der DE 101 40 164 A1 bekannten Getriebenotentriegelung erfolgt die Entriegelung mittels des Getriebewählhebels. Eine Entsperrmechanik ist durch ein Schloss gesichert, nach der Entriegelung des Schlosses ist die Entsperrmechanik freigegeben, so dass der Getriebewählschalter über eine Bewegungsbegrenzung hinweg geschwenkt werden kann, wodurch die Parkstufe mechanisch über einen Bowdenzug entriegelt wird.

Bei der Realisierung einer Getriebenotentriegelung ist eine Reihe von Problemen zu lösen: Der Seilzug muss mit einer Kraft betätigt werden, die manuell nicht aufgebracht werden kann, daher muss eine Kraftübersetzung in die Notentriegelung integriert werden. Um ein unkontrolliertes Wegrollen des Fahrzeugs beim Betätigen der Notentriegelung zu verhindern, muss gleichzeitig die Fußbremse getreten werden. Daher muss sich die Notentriegelung im Greifraum des Fahrers befinden. Um die Seilzuglänge zu begrenzen, muss die Notentriegelung in der Nähe des Getriebes positioniert sein. Dementsprechend eignen sich nur wenige Positionen im Fahrzeug für die Unterbringung der Getriebenotentriegelung. Wenn sich das Getriebe im Vorderwagen befindet, wird die Notentriegelung zweckmäßig im Fahrerfußraum untergebracht. Wenn sich das Getriebe im Hinterwagen befindet, wird die Notentriegelung zweckmäßig in der Mittelkonsole oder neben dem Fahrersitz oder bei einem Zweisitzer in der Hutablage untergebracht.

Herkömmliche Getriebenotentriegelungen benötigen einen großen Bauraum und lassen sich nur in größeren Fahrzeugen problemlos unterbringen. Bei Kleinwagen oder Sportwagen ist dies aufgrund der Anforderungen von Rohbau, Fahrwerk und Ergonomie nicht möglich.

Der Erfindung liegt daher die Aufgabe zugrunde, eine Getriebenotentriegelung anzugeben, deren Einbauraum verringert ist.

Zur Lösung dieser Aufgabe ist bei einer Getriebenotentriegelung der eingangs genannten Art erfindungsgemäß vorgesehen, dass das Betätigungselement eine fahrzeugfeste Aufnahme mit einem Kraftübertragungselement und einen Betätigungshebel aufweist, der zum Deaktivieren der Parkstufe in die fahrzeugfeste Aufnahme einsetzbar ist, um die Parkstufe mittels des Kraftübertragungselements zu deaktivieren.

Die Erfindung beruht auf der Erkenntnis, dass ein Großteil des benötigten Bauraums in kritischen Bereichen eingespart werden kann, indem das Betätigungselement zweiteilig ausgebildet ist und eine fahrzeugfeste Aufnahme und einen davon separaten Betätigungshebel aufweist, der lediglich bei Bedarf, das heißt um eine Notentriegelung des Getriebes durchzuführen, in die fahrzeugfeste Aufnahme eingesetzt wird. Während des Normalbetriebs kann der Betätigungshebel an einer anderen Stelle im Fahrzeug verstaut werden. Die bauraumintensive Mechanik in Form des Betätigungshebels ragt lediglich während einer Notentriegelung des Getriebes zeitlich begrenzt in den Fahrgastraum und ist ansonsten Teil des Bordwerkzeugs. Dadurch ergeben sich beispielsweise zusätzliche Ablageflächen in der Mittelkonsole.

Es wird erwartet, dass automatische Getriebe mit einer Shift-by-Wire-Betätigung in Zukunft vermehrt zum Einsatz kommen, insbesondere im Rahmen des zunehmenden Einsatzes von Hybridfahrzeugen. Ebenso ist davon auszugehen, dass die Anzahl von Steuergeräten zukünftig weiter zunimmt, wodurch Baurauprobleme entstehen können. Die erfindungsgemäße Getriebenotentriegelung kann daher vorteilhaft auch bei Kleinwagen oder Sportwagen eingesetzt werden, da sie lediglich einen äußerst geringen Bauraumbedarf besitzt.

Bei der erfindungsgemäßen Getriebenotentriegelung wird es besonders bevorzugt, dass der Betätigungshebel formschlüssig mit der fahrzeugfesten Aufnahme koppelbar ist. Im gekoppelten Zustand kann die für die Entriegelung erforderliche Kraft aufgebracht und an das Kraftübertragungselement übertragen werden.

Eine besonders platzsparende Befestigung ergibt sich, wenn die fahrzeugfeste Aufnahme der erfindungsgemäßen Getriebenotentriegelung eine Lasche aufweist, in die ein gegengleich geformter Abschnitt des Betätigungshebels einsetzbar ist. Diese Lasche benötigt lediglich einen geringen Bauraum, so dass der Fahrzeuginnenraum nicht unnötig beeinträchtigt wird.

Gemäß einer Weiterentwicklung der erfindungsgemäßen Getriebenotentriegelung kann es vorgesehen sein, dass der Betätigungshebel ein Verriegelungselement aufweist, das in eine fahrzeugfeste Öffnung einsetzbar ist. Diese Öffnung kann insbesondere als Nut oder Loch ausgebildet sein. Durch das Verriegelungselement wird das Betätigungselement fest mit der fahrzeugfesten Aufnahme gekoppelt, damit in diesem Zustand die Parkstufe deaktiviert werden kann.

Bei der erfindungsgemäßen Getriebenotentriegelung ist in der Aufnahme ein mit einem Seilzug verbundener Zuganker angeordnet, der beim Einsetzen des Betätigungshebels in die Aufnahme form- und/oder kraftschlüssig mit dem Betätigungshebel koppelbar ist. Die Kopplung entsteht vorzugsweise automatisch beim Einsetzen des Betätigungshebels.

Gemäß einer Weiterbildung der Erfindung kann es vorgesehen sein, dass der Betätigungshebel eine Handkurbel und vorzugsweise eine Kraftübersetzung zur Verringerung der manuell aufbringbaren Betätigungskraft umfasst. Auf diese Weise kann eine Notentriegelung mit geringem Kraftaufwand durch einen Benutzer durchgeführt werden.

Alternativ kann es bei der erfindungsgemäßen Getriebenotentriegelung vorgesehen sein, dass der Betätigungshebel einen formschlüssig mit der fahrzeugfesten Aufnahme koppelbaren Schlitten aufweist, der mit einem Hebelgriff koppelbar ist, um die Parkstufe mittels eines in der Aufnahme angeordneten, mit einem Seilzug verbundenen Zuganker zu deaktivieren.

Es liegt auch im Rahmen der Erfindung, dass der Betätigungshebel ein Außengewinde und/oder einen Zapfen aufweist, wodurch der Betätigungshebel mittels eines Innengewindes und/oder einer Kulisse des Gehäuses geführt ist. Vorzugsweise ist das Gewinde so ausgebildet, dass keine Selbsthemmung entsteht. Der mit dem Betätigungshebel gekoppelte Schlitten ist drehfest am Gehäuse abgestützt und axial verschiebbar. Er ist an dem Betätigungshebel drehbar befestigt und wird bei einer axialen Bewegung des Betätigungsgriffs mitgeführt. Wenn der Betätigungshebel gedreht wird, bewegt er sich über das Gewinde und/oder die Kulisse axial nach oben und zieht den Schlitten mit dem Zuganker mit, wodurch die Parkstufe mittels des Kraftübertragungselements deaktiviert wird. Eine Weiterbildung der Erfindung kann vorsehen, dass der Betätigungshebel in einer Endposition bei betätigtem (ausgelöstem) Betätigungselement feststellbar ist. Die Kulisse des Gehäuses ist so ausgebildet, dass der Zapfen des Betätigungshebels in der Endposition verrastet. Der Nutzer erhält somit eine Rückmeldung, so dass er erkennen kann, wenn die Parkstufe deaktiviert und das Getriebe entriegelt worden ist.

Eine Weiterbildung kann vorsehen, dass die Getriebenotentriegelung durch Aufwenden einer Kraft seitens des Nutzers und der Unterstützung einer Rückstellfeder wieder in die Ausgangsposition überführt werden kann.

Vorzugsweise ist in der Verriegelung der Notentriegelung ein Stift oder Auswerfer vorgesehen, der beim Hochschieben der Verriegelung den Zapfen aus der Endposition drückt. Dadurch wird beim Abnehmen des Betätigungselements die verriegelte Position wieder gelöst, der Schlitten nach unten bewegt und die Deaktivierung der Parkstufe wieder aufgehoben.

Neben den beschriebenen manuell bedienbaren Varianten der erfindungsgemäßen Getriebenotentriegelung ist eine elektrifizierte Variante möglich. Diese weist einen integrierten Elektromotor auf, der durch einen Akkumulator mit Energie versorgt wird. Anstelle eines Betätigungshebels ist eine Drucktaste an dem Betätigungselement vorgesehen, durch die ein Betätigungsgriff oder ein Betätigungshebel ersetzt wird. Der untere Bereich des Betätigungselements, der ein Gehäuse, eine Führungshülse bzw. ein Außengewinde und/oder einen Zapfen umfasst, bleibt jedoch gleich. Diese elektrische Variante wird wie die manuell bedienbare Variante in die fahrzeugfeste Aufnahme eingesetzt und verriegelt. Durch die Betätigung der Drucktaste bewegt der Elektromotor ein Bauteil, durch den der Schlitten hochgezogen wird, wodurch die Parkstufe deaktiviert wird. Der Akkumulator liefert die für die Betätigung notwendige Energie, wenn das Bordnetz ausgefallen ist. Insbesondere eignet sich ein leistungsstarker Akkumulator wie eine Lithium-Ionen-Batterie, die eine mehrjährige Funktionsdauer gewährleistet.

Primär ist die Getriebenotentriegelung für solche Fälle vorgesehen, wenn das gesamte Bordnetz ausgefallen ist. Falls das Bordnetz bei einer Störung jedoch nur teilweise ausgefallen ist oder das automatische Getriebe aus einem anderen Grund verriegelt ist, so ist ein Anschluss der erfindungsgemäßen Getriebenotentriegelung an das Bordnetz zusätzlich zu dem integrierten Akkumulator als Stromquelle ebenfalls denkbar. Dazu weist die Getriebenotentriegelung einen entsprechenden elektrischen Anschluss auf, beispielsweise eine Kontaktstelle. Das Betätigungselement verfügt über eine entsprechende Gegenkontaktstelle und eine Verkabelung für die Stromzufuhr zum Elektromotor. In diesen Fällen dient der integrierte Akkumulator lediglich als "Notfalllösung".

Bei größeren Fahrzeugen, beispielsweise bei Lastkraftwagen, sind der Fahrgastraum und das automatische Getriebe weit voneinander entfernt, der Seilzug ist daher sehr lang und dementsprechend aufwändig. Um diesen Nachteil zu vermeiden, kann zwischen der Getriebenotentriegelung und dem automatischen Getriebe eine elektrische Entkopplung vorgesehen sein. Der Mechanismus für die elektrische Notentriegelung kann sich außerhalb der Fahrerkabine in der Nähe des automatischen Getriebes befinden. Im Fahrerhaus befindet sich eine Fernbedienung, die an das Bordnetz und/oder eine unabhängige Stromquelle (Akkumulator) angeschlossen ist. Zur Betätigung der erfindungsgemäßen Getriebenotentriegelung kann der Fahrer aus dem Fahrgastraum die Fernbedienung bedienen. Diese sendet ein Signal an die Notentriegelung, wodurch der integrierte Elektromotor das Kraftübertragungselement, insbesondere einen Seilzug zieht, wodurch die Parkstufe deaktiviert wird.

Zusätzlich zu der Fernbedienung werden ein Sender und ein Empfänger an der Notentriegelung benötigt, um das Signal von der Fernbedienung zu empfangen und nach der Entriegelung des automatischen Getriebes ein entsprechendes Signals zurückzusenden. Dadurch kann der Fahrer über eine Kontrollleuchte eine Rückmeldung erhalten, nachdem die Parkstufe des automatischen Getriebes deaktiviert worden ist.

Daneben betrifft die Erfindung ein Kraftfahrzeug. Das erfindungsgemäße Kraftfahrzeug weist eine Getriebenotentriegelung der beschriebenen Art auf.

Weitere Vorteile und Einzelheiten der Erfindung werden nachfolgend anhand von Ausführungsbeispielen unter Bezugnahme auf die Zeichnungen erläutert. Die Zeichnungen sind schematische Darstellungen und zeigen:
- Fig. 1: eine perspektivische Ansicht einer fahrzeugfesten Aufnahme eines ersten Ausführungsbeispiels einer erfindungsgemäßen Getriebenotentriegelung;
- Fig. 2: die in Fig. 1 gezeigte fahrzeugfeste Aufnahme und einen eine Handkurbel umfassenden Betätigungshebel;
- Fig. 3: den Betätigungshebel nach dem Einsetzen in die Aufnahme;
- Fig. 4: ein Detail des in die Aufnahme eingesetzten Fußes des Betätigungshebels;
- Fig. 5: ein zweites Ausführungsbeispiel einer erfindungsgemäßen Getriebenotentriegelung mit einem einen Schlitten aufweisenden Betätigungselement;
- Fig. 6: das in Fig. 5 gezeigte Betätigungselement in einer geschnittenen Ansicht;
- Fig. 7: einen Betätigungshebel mit größerem Hebelweg;
- Fig. 8: einen Zuganker;
- Fig. 9: ein weiteres Ausführungsbeispiel eines Zugankers;
- Fig. 10: ein weiteres Ausführungsbeispiel einer fahrzeugfesten Aufnahme;
- Fig. 11: ein weiteres Ausführungsbeispiel einer erfindungsgemäßen Getriebenotentriegelung;
- Fig. 12: eine vergrößerte Ansicht der Kulisse;
- Fig. 13: die Getriebenotentriegelung in der Endposition;
- Fig. 14: die Verriegelung in der Endposition von Fig. 13 in einer vergrößerten Ansicht; und
- Fig. 15: die Getriebenotentriegelung beim Entsperren durch einen Zapfen.

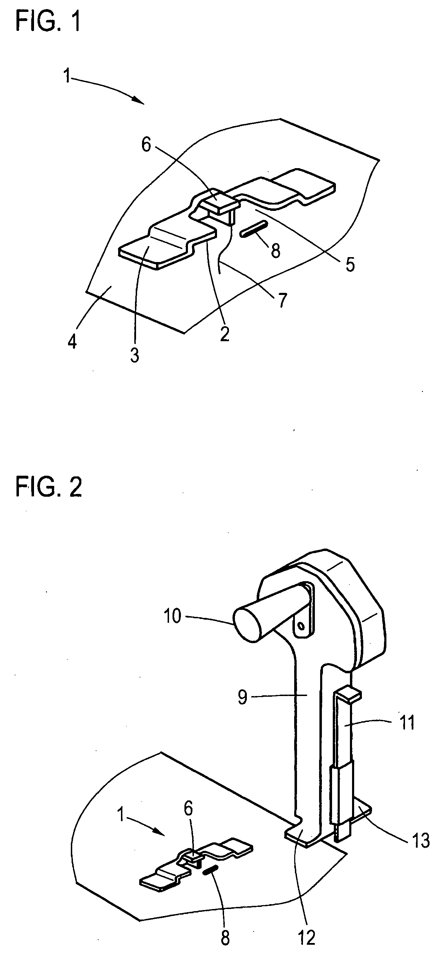

Fig. 1 ist eine perspektivische Ansicht einer fahrzeugfesten Aufnahme 1 als Bestandteil eines Betätigungselements einer Getriebenotentriegelung für ein automatisches Getriebe eines Kraftfahrzeugs. Die fahrzeugfeste Aufnahme umfasst eine Lasche 2, die gegenüber einem Befestigungsabschnitt 3 abgewinkelt ist. Der Befestigungsabschnitt 3 ist fest mit einer Fahrzeugkarosserie 4 verbunden, in dem dargestellten Ausführungsbeispiel ist er verschweißt. Zwischen der Fahrzeugkarosserie 4 und dem Befestigungsabschnitt 3 ist ein Freiraum gebildet, in den ein Betätigungselement einsetzbar ist. Die fahrzeugfeste Aufnahme 1 ist symmetrisch ausgebildet, in der Mitte weist sie eine einseitige Öffnung 5 auf, in die das Betätigungselement eingesetzt werden kann. Die einseitige Öffnung 5 ist als rechteckige Ausnehmung der Lasche 2 ausgebildet.

In Fig. 1 befindet sich in der Öffnung 5 ein Zuganker 6, der T-förmig ausgebildet ist und an seinem unteren Ende mit einem Seilzug 7 verbunden ist. Der Seilzug 7 ist Bestandteil eines Bowdenzugs, dessen anderes Ende an einem automatischen Getriebe angebracht ist, so dass die Parkstufe des automatischen Getriebes durch eine auf den Zuganker 6 einwirkende Zugkraft deaktiviert werden kann.

Neben der Öffnung 5 der Lasche 2 ist eine fahrzeugfeste Öffnung vorgesehen, die als Nut 8 ausgebildet ist. In die Nut 8 kann ein als Betätigungshebel ausgebildetes Betätigungselement eingesetzt und verriegelt werden.

Fig. 2 zeigt die fahrzeugfeste Aufnahme 1 und einen Betätigungshebel 9. Der Betätigungshebel 9 umfasst eine Kurbel 10, um im gekoppelten Zustand eine Zugkraft auf den Zuganker 6 auszuüben. Der Betätigungshebel 9 weist vordere und hintere Fußabschnitte 12, 13 auf, deren Form und Größe an die Lasche 2 angepasst ist. Die Fußabschnitte 12, 13 können seitlich in den Freiraum zwischen der Lasche 2 und der Fahrzeugkarosserie 4 geschoben werden, bis sich der Betätigungshebel 9 in der Öffnung 5 befindet. Anschließend kann eine Verriegelung 11 in die Nut 8 gedrückt werden, um den Betätigungshebel 9 formschlüssig mit der fahrzeugfesten Aufnahme 1 zu koppeln. Beim Einsetzen beziehungsweise Einschuhen wird gleichzeitig der Zuganker 6 formschlüssig in einem Schlitten im Inneren des Betätigungshebels 9 aufgenommen.

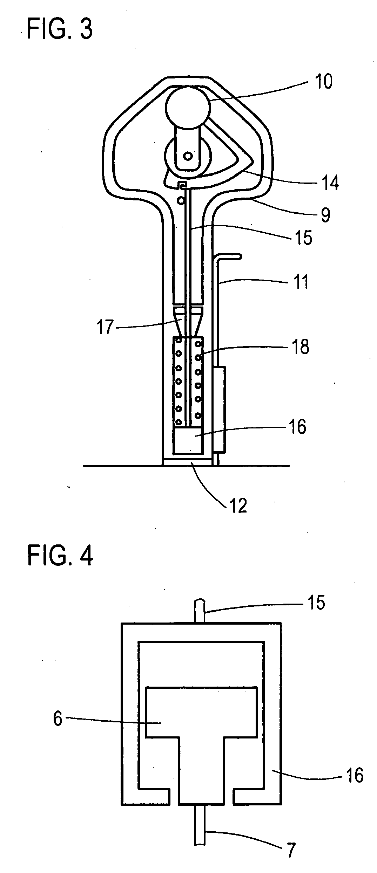

Die Kurbel 10 ist über eine Übersetzung 14 mit einem Seilzug 15 verbunden, der an seinem unteren Ende einen Schlitten 16 aufweist. Beim Einschuhen wird der Zuganker 6 formschlüssig in dem Schlitten 16 aufgenommen, wie in Fig. 4 gezeigt ist.

Beim Drehen der Kurbel 10 wird über die Übersetzung 14 der Seilzug 15 zusammen mit dem daran angebrachten Schlitten 16 nach oben gezogen, wodurch eine Zugkraft auf den Zuganker 6 und den mit diesem verbundenen Seilzug 7 ausgeübt wird. Um ein Zurückschnellen des Schlittens 16 beim Loslassen der Kurbel 10 zu verhindern, weist der Betätigungshebel 9 eine Keilbremse 17 auf. Damit sich der Schlitten 16 vor der Durchführung einer Getriebenotentriegelung in der in Fig. 3 gezeigten Ausgangsposition befindet, ist oberhalb des Schlittens 16 eine Rückstellfeder 18 angebracht, die den Schlitten 16 nach unten drückt. Beim Drehen der Kurbel 10 wird die Kraft der Feder 18 überwunden und der Schlitten 16 nach oben gezogen.

Bei anderen Ausführungsbeispielen weist die Kurbel 10 einen Sperrbolzen auf, um die Kurbel 10 in der Endstellung, nach der Deaktivierung der Parkstufe, zu sperren.

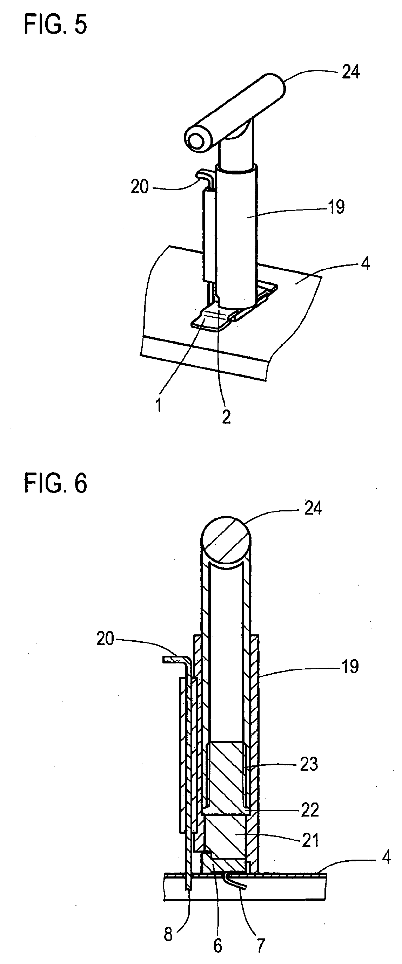

Die Figuren 5 und 6 zeigen ein zweites Ausführungsbeispiel der wesentlichen Komponenten einer Getriebenotentriegelung. Die auf der Fahrzeugkarosserie 4 befestigte fahrzeugfeste Aufnahme 1 entspricht im Wesentlichen derjenigen des ersten Ausführungsbeispiels.

Das Betätigungselement umfasst ein rohrförmiges Gehäuse 19, das in die Lasche 20 einschuhbar ist. An einer Seite des Gehäuses 19 befindet sich eine Verriegelung 20, die nach dem Einschuhen in die Nut 8 heruntergedrückt werden kann, um das Betätigungselement formschlüssig mit der fahrzeugfesten Aufnahme 1 zu verbinden.

Im Inneren des Gehäuses 19 befindet sich ein Schlitten 21, der drehfest in dem Gehäuse 19 aufgenommen ist. An der Außenseite des Schlittens 21 sind Ausleger oder Vorsprünge 22 vorgesehen, die eine Verdrehung des Schlittens 21 gegenüber dem Gehäuse 19 verhindern. Ein oberer Abschnitt des Schlittens 21 weist ein Außengewinde 23 auf. In dem unteren Abschnitt des Schlittens 21 ist der Zuganker 6 aufgenommen, an dessen Unterseite sich der Seilzug 7 befindet.

Das Betätigungselement umfasst ferner einen hohlen Griff 24 mit einem Innengewinde, der auf das Außengewinde 23 des Schlittens 21 geschraubt ist.

Beim Drehen des Griffs 24 wird durch die Kopplung des Innengewindes in den Griff 24 mit dem Außengewinde 23 des Schlittens 21 der drehfest gelagerte Schlitten 21 mit den darin formschlüssig aufgenommenen Zuganker 6 nach oben bewegt.

Durch die Kraftübertragung über das selbsthemmend ausgebildete Gewinde können einerseits die erforderlichen Kräfte übersetzt werden, anderseits ist ein ungewünschtes Zurückschnellen des Schlittens 21 in Richtung der Karosserie 4 ausgeschlossen. Das in den Figuren 5 und 6 gezeigte Ausführungsbeispiel zeichnet sich durch eine geringe Anzahl an Komponenten aus.

Das Betätigungselement, das im Wesentlichen aus dem Gehäuse 19 und dem Griff 24 besteht, wird lediglich zur Durchführung einer Getriebenotentriegelung in die fahrzeugfeste Aufnahme 1 eingesetzt, ansonsten wird es an einer anderen Stelle im Fahrzeug, beispielsweise beim Bordwerkzeug, verstaut.

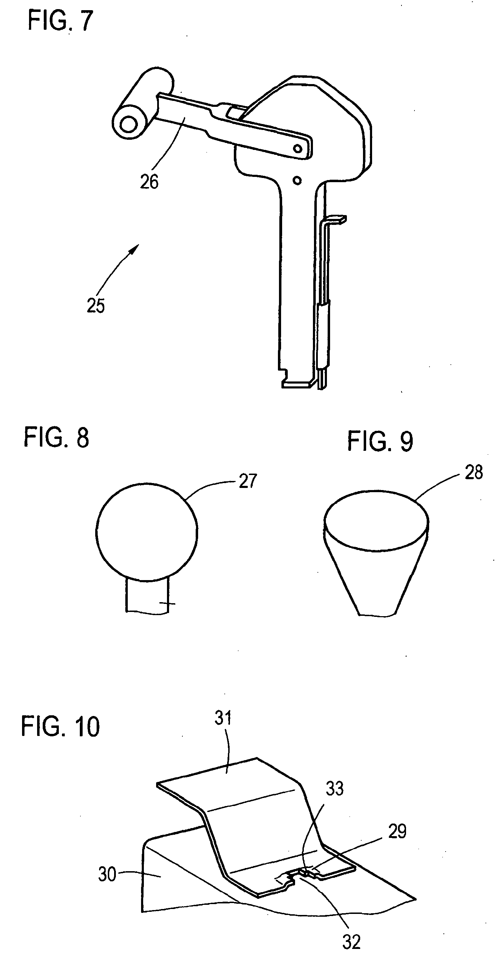

Fig. 7 zeigt ein Ausführungsbeispiel eines anders aufgebauten Betätigungshebels. Grundsätzlich entspricht der in Fig. 7 gezeigte Betätigungshebel 25 dem Betätigungshebel 9 des ersten Ausführungsbeispiels. Der Betätigungshebel 25 weist allerdings einen Griff 26 mit einem längeren Hebelarm auf, wodurch zusätzlich zu der Übersetzung die Bedienkräfte reduziert werden.

Die Figuren 8 und 9 stellen alternative Ausführungen eines Zugankers dar. Fig. 8 zeigt einen Zuganker 27 mit einem Kugelkopf, der von einem entsprechend geformten Schlitten aufgenommen werden kann. Als weitere Alternative zeigt Fig. 9 einen birnenförmig ausgebildeten Zuganker 28, der ebenfalls durch einen entsprechend geformten Schlitten aufgenommen und gezogen werden kann. Bei den in den Figuren 8 und 9 gezeigten Zugankern liegt ein Formschluss vor, es sind jedoch auch andere Ausführungen mit einer kraftschlüssigen Aufnahme des Zugankers in dem Schlitten denkbar.

Fig. 10 zeigt schließlich ein alternatives Ausführungsbeispiel einer fahrzeugfesten Aufnahme 29. Die fahrzeugfeste Aufnahme 29 ist im Bereich eines Tunnels 30 einer Fahrzeugkarosserie angebracht und in eine ohnehin vorhandene Karosseriekomponente 31 integriert. Im Bereich der Befestigung der Karosseriekomponente 31 an dem Tunnel 30 weist die fahrzeugfeste Aufnahme 29 - analog zu der in Fig. 1 gezeigten Aufnahme - eine Öffnung 32 und eine abgewinkelte Lasche 33 auf, wodurch ein Freiraum gebildet wird, in den ein Betätigungselement einschuhbar ist. Durch die Integration der fahrzeugfesten Aufnahme in eine vorhandene Karosseriekomponente 31 kann die Getriebenotentriegelung besonders einfach und mit geringem Aufwand realisiert werden.

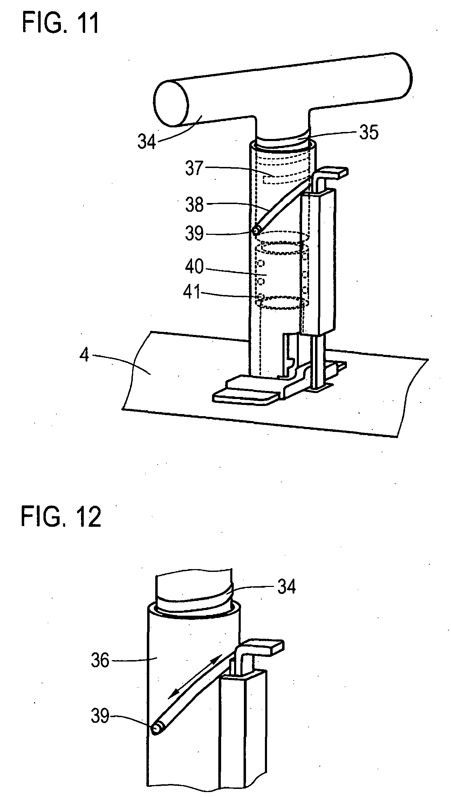

Fig. 11 zeigt ein Ausführungsbeispiel einer Getriebenotentriegelung, mit einem Betätigungshebel 34, der ein Außengewinde 35 aufweist, das mit einem Innengewinde eines Gehäuses 36 zusammenwirkt. Das Außengewinde 35 und das Innengewinde 37 sind so ausgebildet, dass keine Selbsthemmung auftritt.

Das Gehäuse 36 umfasst eine Kulisse 38, die schraubenförmig verläuft und in der ein Zapfen 39 des Betätigungshebels 34 geführt ist. Ein Schlitten 40 ist verdrehbar an dem Betätigungshebel 34 angebracht, der Schlitten 40 ist drehfest gegenüber dem Gehäuse 36 und axial verschiebbar. Wenn der Betätigungshebel 34 durch einen Benutzer gedreht wird, wird dieser mittels der ineinander greifenden Gewinde 35, 37 und des in der Kulisse 38 laufenden Zapfens axial von der Fahrzeugkarosserie 4 weg (nach oben) bewegt. Am unteren Ende des Schlittens 40 ist ein Zuganker befestigt, der hochgezogen wird und dadurch die Parkstufe deaktiviert.

Zwischen dem Gehäuse 36 und dem Schlitten 40 ist ein Federelement 41 angeordnet, das beim Loslassen des Betätigungshebels 34 eine Rückstellkraft erzeugt, durch die der Betätigungshebel 34 in die Ausgangsposition zurückbewegt wird.

Fig. 12 zeigt den Bereich der Kulisse 38 des Gehäuses 36 in einem vergrößerten Maßstab. In Fig. 12 befindet sich der Zapfen 39 in seiner Ausgangsposition, das heißt im nicht betätigten Zustand, in dem die Parkstufe aktiviert ist. Beim Entriegeln durch einen Benutzer wird der Zapfen 39 durch die Drehung des Betätigungshebels 34 entlang der Kulisse 38 bewegt, wie durch den Doppelpfeil angedeutet ist.

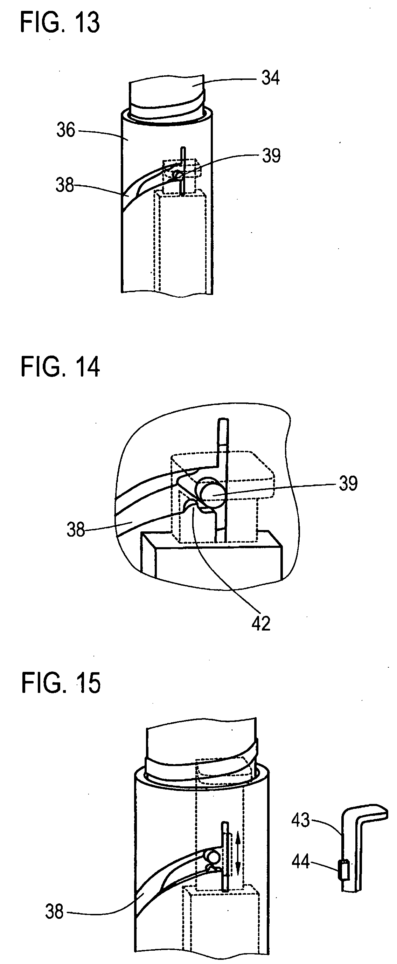

Fig. 13 zeigt gemeinsam mit Fig. 14 die Endposition, nachdem der Zapfen 39 das obere Ende der Kulisse 38 erreicht hat. Am oberen Ende der Kulisse 38 weist diese einen vorspringenden Rastabschnitt 42 auf, hinter den der Zapfen 39 einrastet. Dieses Einrasten wird vom Benutzer wahrgenommen, sodass dieser erkennen kann, dass sich der Betätigungshebel 34 in der Verriegelungsposition befindet.

Indem der Benutzer Kraft aufwendet, kann er den Zapfen 39 über den Rastabschnitt 42 führen, unter der Wirkung des Federelements 41 wird der Zapfen 39 entlang der Kulisse 38 geführt, dabei senkt sich der Schlitten 40 ab, bis er wieder die Ausgangsposition erreicht hat. Der Betätigungshebel 34 dreht sich dabei ebenfalls wieder zurück in die Ausgangsposition. Das Entriegeln durch Anheben des Zapfens 39 über den Rastabschnitt 42 ist in Fig. 15 gezeigt. Beim Hochschieben des Verriegelungselements 43 drückt dieser mittels eines Auswerfers 44 automatisch den Zapfen 39 aus der verriegelten Endposition über den Rastabschnitt 43. Dadurch wird gewährleistet, dass beim Entfernen des Betätigungselements aus der fahrzeugfesten Aufnahme die Notentriegelung deaktiviert wird und sich der Schlitten unten, in seiner Ausgangsposition befindet.

## Patentansprüche

1. Getriebenotentriegelung für ein bei eingelegter Parkstufe mechanisch blockiertes automatisches Getriebe, mit einem manuell betätigbaren Betätigungselement zum mechanischen Deaktivieren der Parkstufe, das eine fahrzeugfeste Aufnahme (1, 29) mit einem Kraftübertragungselement und einen Betätigungshebel (9, 25, 34) aufweist, der zum Deaktivieren der Parkstufe in die fahrzeugfeste Aufnahme (1, 29) einsetzbar ist, um die Parkstufe mittels des Kraftübertragungselements zu deaktivieren,
**dadurch gekennzeichnet,**
**dass** in der Aufnahme (1, 29) ein mit einem Seilzug (7) verbundener Zuganker (6,27,28) angeordnet ist, der beim Einsetzen des Betätigungshebels (9, 25) in die Aufnahme (1, 29) form- und/oder kraftschlüssig mit dem Betätigungshebel (9, 25, 34) koppelbar ist.

2. Getriebenotentriegelung nach Anspruch 1,
**dadurch gekennzeichnet,**
**dass** der Betätigungshebel (9, 25) formschlüssig mit der fahrzeugfesten Aufnahme (1, 29) koppelbar ist.

3. Getriebenotentriegelung nach Anspruch 1 oder 2,
**dadurch gekennzeichnet,**
**dass** die fahrzeugfeste Aufnahme (1, 29) eine Lasche (2, 33) aufweist, in die ein vorzugsweise gegengleich geformter Abschnitt des Betätigungshebels (9, 25) einsetzbar ist.

4. Getriebenotentriegelung nach einem der vorangehenden Ansprüche,
**dadurch gekennzeichnet,**
**dass** der Betätigungshebel (9, 25) ein Verriegelungselement (11, 20, 43) aufweist, das in eine fahrzeugfeste Öffnung, die insbesondere als Nut (8) oder als Loch ausgebildet ist, einsetzbar ist.

5. Getriebenotentriegelung nach einem der vorangehenden Ansprüche,
**dadurch gekennzeichnet,**
**dass** der Betätigungshebel (9) eine Kurbel (10) und vorzugsweise eine Kraftübersetzung zur Verringerung der manuell aufbringbaren Betätigungskraft umfasst.

6. Getriebenotentriegelung nach einem der Ansprüche 1 bis 4,
**dadurch gekennzeichnet,**
**dass** der Betätigungshebel einen formschlüssig mit der fahrzeugfesten Aufnahme (1) koppelbaren Schlitten (21, 40) aufweist, der mit einem Hebelgriff (24, 34) koppelbar ist, um die Parkstufe mittels des in der Aufnahme angeordneten, mit dem Seilzug (7) verbundenen Zugankers (6, 27, 28) zu deaktivieren.

7. Getriebenotentriegelung nach Anspruch 6,
**dadurch gekennzeichnet,**
**dass** der Betätigungshebel ein Außengewinde und/oder einen Zapfen aufweist, der mittels eines Innengewindes und/oder mittels einer Kulisse in einem Gehäuse geführt ist.

8. Getriebenotentriegelung nach Anspruch 6 oder 7,
**dadurch gekennzeichnet,**
**dass** der Betätigungshebel in einer Endposition nach dem Auslösen des Kraftübertragungselements feststellbar ist.

9. Kraftfahrzeug, mit einem automatischen Getriebe,
**dadurch gekennzeichnet,**
**dass** das automatische Getriebe eine Getriebenotentriegelung nach einem der Patentansprüche 1 bis 8 aufweist.

## Claims

1. A transmission emergency unlocking means for an automatic transmission which is mechanically blocked when a parking stage is engaged, having a manually actuatable actuating element for the mechanical deactivation of the parking stage, which has a receptacle (1, 29) fixed with respect to the vehicle with a force-transmission element and an actuating lever (9, 25, 34), which can be inserted into the receptacle (1, 29) fixed with respect to the vehicle in order to deactivate the parking stage by means of the force-transmission element,
**characterized in**
**that** in the receptacle (1, 29) a tie rod (6, 27, 28) connected to a cable pull (7) is arranged, which tie rod upon insertion of the actuating lever (9, 25) into the receptacle (1, 29) can be positively and non-positively coupled with the actuating lever (9, 25, 34).

2. A transmission emergency unlocking means according to claim 1,
**characterized in**
**that** the actuating lever (9, 25) is positively coupled to the receptacle (1, 29) fixed with respect to the vehicle.

3. A transmission emergency unlocking means according to claim 1 or 2,
**characterized in**
**that** the receptacle (1, 29) fixed with respect to the vehicle has a bracket (2, 33), into which a section of the actuating lever (9, 25) preferably shaped mirror-inverted can be inserted.

4. A transmission emergency unlocking means according to one of the preceding claims,
**characterized in**
**that** the actuating lever (9, 25) has a locking element (11, 20, 43), which can be inserted into an opening fixed in respect to the vehicle, which is designed in particular as a groove (8) or as a hole.

5. A transmission emergency unlocking means according to one of the preceding claims,
**characterized in**
**that** the actuating lever (9) comprises a crank (10) and preferably a force transmission for reducing the actuating force which can be manually applied.

6. A transmission emergency unlocking means according to one of claims 1 to 4,
**characterized in**
**that** the actuating lever has a slide (21, 40) which can be positively coupled with the receptacle (1) fixed in respect to the vehicle, which slide can be coupled with a lever hold (24, 34), in order to deactivate the park stage by means of the tie rod (5, 6, 27, 28) connected to the cable pull (7), which tie rod is arranged in the receptacle.

7. A transmission emergency unlocking means according to claim 6,
**characterized in**
**that** the actuating lever has an outer thread and/or a pin, which is guided by means of an inner thread and/or by means of a connecting link in a housing.

8. A transmission emergency unlocking means according to claim 6 or 7,
**characterized in**
**that** the actuating lever can be fixed in an end position after the triggering of the force transmission element.

9. A motor vehicle, with an automatic transmission,
**characterized in**
**that** the automatic transmission has a transmission emergency unlocking means according to one of the patent claims 1 to 8.

## Revendications

1. Déverrouillage d'urgence de boîte de vitesses pour une boîte de vitesses automatique bloquée mécaniquement lorsque la position de stationnement est engagée, avec un élément d'actionnement actionnable manuellement pour la désactivation mécanique de la position de stationnement, qui présente un logement (1, 29) fixé au véhicule avec un élément de transmission de force, et un levier d'actionnement (9, 25, 34) qui peut être inséré pour la désactivation de la position de stationnement dans le logement (1, 29) fixé au véhicule afin de désactiver la position de stationnement à l'aide de l'élément de transmission de force,
**caractérisé en ce**
**qu'**un tirant (6, 27, 28) relié à un câble de traction (7) est agencé dans le logement (1, 29), lequel tirant peut être couplé lors de l'insertion du levier d'actionnement (9, 25) dans le logement (1, 29) par complémentarité de formes et/ou à force au levier d'actionnement (9, 25, 34).

2. Déverrouillage d'urgence de boîte de vitesses selon la revendication 1,
**caractérisé en ce**
**que** le levier d'actionnement (9, 25) peut être couplé par complémentarité de formes au logement (1, 29) fixé au véhicule.

3. Déverrouillage d'urgence de boîte de vitesses selon la revendication 1 ou 2,
**caractérisé en ce**
**que** le logement (1, 29) fixé au véhicule présente une languette (2, 33), dans laquelle une section formée de préférence de manière diamétralement opposée du levier d'actionnement (9, 25) peut être insérée.

4. Déverrouillage d'urgence de boîte de vitesses selon l'une quelconque des revendications précédentes,
**caractérisé en ce**
**que** le levier d'actionnement (9, 25) présente un élément de verrouillage (11, 20, 43) qui peut être inséré dans une ouverture fixée au véhicule qui est réalisée en particulier comme une rainure (8) ou comme un trou.

5. Déverrouillage d'urgence de boîte de vitesses selon l'une quelconque des revendications précédentes,
**caractérisé en ce**
**que** le levier d'actionnement (9) comporte une manivelle (10) et de préférence une transmission de force pour la diminution de la force d'actionnement applicable manuellement.

6. Déverrouillage d'urgence de boîte de vitesses selon l'une quelconque des revendications 1 à 4,
**caractérisé en ce**
**que** le levier d'actionnement présente un chariot (21, 40) pouvant être couplé par complémentarité de formes au logement (1) fixé au véhicule, lequel chariot peut être couplé à une poignée de levier (24, 34) afin de désactiver la position de stationnement à l'aide du tirant (6, 27, 28) relié au câble de traction (7), agencé dans le logement.

7. Déverrouillage d'urgence de boîte de vitesses selon la revendication 6,
**caractérisé en ce**
**que** le levier d'actionnement présente un filet extérieur et/ou un tenon qui est guidé à l'aide d'un filet intérieur et/ou à l'aide d'une coulisse dans un boîtier.

8. Déverrouillage d'urgence de boîte de vitesses selon la revendication 6 ou 7,
**caractérisé en ce**
**que** le levier d'actionnement peut être fixé dans une position d'extrémité après le détachement de l'élément de transmission de force.

9. Véhicule automobile avec une boîte de vitesses automatique,
**caractérisé en ce**
**que** la boîte de vitesses automatique présente un déverrouillage d'urgence de boîte de vitesses selon l'une quelconque des revendications 1 à 8.
